# EUROPEAN PATENT SPECIFICATION

(11) **EP 2 235 386 B1**
(45) Date of publication and mention of the grant of the patent: **14.06.2017**
(21) Application number: 08862181.8
(22) Date of filing: 09.12.2008
(51) Int. Cl.: F16B 15/06

(54) **DEFORMED SHANK FASTENER**
NAGEL MIT PROFILSCHAFT
FIXATION À TIGE DÉFORMÉE

(30) Priority: 14.12.2007 US 956773
(43) Date of publication of application: 06.10.2010
(73) Proprietor: Illinois Tool Works Inc., Glenview, IL 60025 (US)
(72) Inventor: VERSINO, Anthony M., Glenview Illinois 60026 (US); LEVEY, Kenneth R., Glenview Illinois 60026 (US); TRZASKUS, Jeffrey L., Glenview Illinois 60026 (US); SHELTON, Lawrence S., Glenview Illinois 60026 (US); BERGSTROM, Donald E., Glenview Illinois 60026 (US)
(74) Representative: Gevers & Orès
(86) International application number: PCT/US2008/086007
(87) International publication number: WO 2009/079266

(56) References cited:
- CH-A- 247 777
- DE-A1- 2 038 885
- FR-A- 1 115 028
- US-A- 1 784 754
- US-A- 5 741 104

## Description

### BACKGROUND OF THE INVENTION

This invention pertains to fasteners. More particularly, the invention pertains to a nail with a shank having a plurality of spiral formed deformations configured to increase the holding power of the nail. Background of the invention includes for instance FR-A-1 115 028 and DE-A1-20 38 885.

Round nails, that is, nails having cylindrical shanks, have been produced for hundreds of years. These are the easiest type of nail to manufacture, because of their symmetrical shape. Moreover, round nails exhibit relatively predictable, uniform properties, such as holding power, when driven into wood.

Holding power, or withdrawal strength, refers to the nail's resistance to an axial force (a load parallel to the nail shank). This includes the nail's resistance to withdrawing from the substrate into which it is driven.

Altering the shape of a nail shank to increase holding power is known. For example, ring shank nails are known, which have peripheral rings formed in the shank. The rings can extend from the head to the driving end or tip of the nail.

Other fasteners have grooves formed longitudinally along the shank. The shape and number of the grooves can vary and can include "star" or other shapes.

Still another nail, disclosed in Lat, U.S. Patent No. 5,741,104, includes annular rings and a circumferential array of helical grooves that may be deeper or shallower than the annular rings.

While all of these alterations to the shape of the nail increase the holding power of the nail, there is always the potential for pull-out of the nails from the substrate.

Accordingly, inasmuch as there will always be the possibility that a nail will pull out unless the holding power is as great as the inherent strength of the substrate material (e.g., the lumber into which the nail is driven), there is a need for a nail having increased holding power. Desirably, such a nail is fabricated without the need for additional material (in the nail) over that of a standard nail of the same size, and without affecting the other characteristics (e.g., shear strength, hardness) of the nail.

### BRIEF SUMMARY OF THE INVENTION

A nail having increased holding power has a head, a penetrating tip, a shank extending from the head to the penetrating tip and having a circumference and a longitudinal axis. The nail has a plurality of rows of deformations, preferably formed as teeth, in the shank extending outwardly of the shank. The rows of teeth are formed in a spiral pattern along the length of the shank from about the head to about the penetrating tip. The rows of teeth are formed parallel to one another and formed at an angle of at least 50 degrees relative to a longitudinal axis of the nail.

The teeth are formed with a leading portion tapering toward the shank toward the penetrating tip and a trailing portion having an interference surface oriented toward the head, opposite the leading portion. The teeth can have a generally triangular cross-sectional shape. The triangular cross-sectional shape can be symmetrical.

In a present embodiment, the rows are equally circumferentially spaced from one another. A present nail has six rows of teeth.

The nail can be formed as a ring shank nail having circumferential rings formed in the shank. The teeth can be formed integral with the rings. The rings can be spaced from one another a distance that is different from a length of the teeth and different from a multiple of the length of the teeth. The rings can have a height that is less than a maximum height of the teeth.

The teeth overlap one another at adjacent leading ends and trailing ends.

These and other features and advantages of the present invention will be apparent from the following detailed description, in conjunction with the appended claims.

### BRIEF DESCRIPTION OF THE SEVERAL VIEWS OF THE DRAWINGS

The benefits and advantages of the present invention will become more readily apparent to those of ordinary skill in the relevant art after reviewing the following detailed description and accompanying illustrations and drawings, wherein:

FIGS. 1A-1F are an illustration (FIG. 1A), an enlarged view (FIG. 1B), a cross-sectional view (FIG. 1C, taken along line 1C--1C of FIG. 1B), and details (FIGS. 1D-1F) of one embodiment of a deformed shank nail embodying the principles of the present invention;

FIGS. 2A-2F are illustrations and views similar to those of FIGS 1A-1F of an alternate embodiment of the deformed shank nail;

FIGS. 3A-3F are illustrations and views similar to those of the previous figures showing an alternate embodiment of the deformed shank nail;

FIGS. 4A-4F are illustrations and views similar to those of the previous figures showing another deformed shank nail;

FIGS. 5A-5F are illustrations and views similar to those of the previous figures showing yet another alternate embodiment of the deformed shank nail; and

FIGS. 6A-6B illustrate yet another alternate embodiment of the deformed shank nail.

### DETAILED DESCRIPTION OF THE INVENTION

While the present invention is susceptible of embodiment in various forms, there is shown in the drawings and will hereinafter be described several preferred embodiments with the understanding that the present disclosure is to be considered an exemplification of the invention and is not intended to limit the invention to the specific embodiments illustrated.

The present invention pertains to a nail 10 having a shank 12 having deformations 14 formed therein. The deformations 14 increase the holding power of the nail 10 (increase resistance to pull-out as compared to a nail having no deformations or alterations in the shank wall.

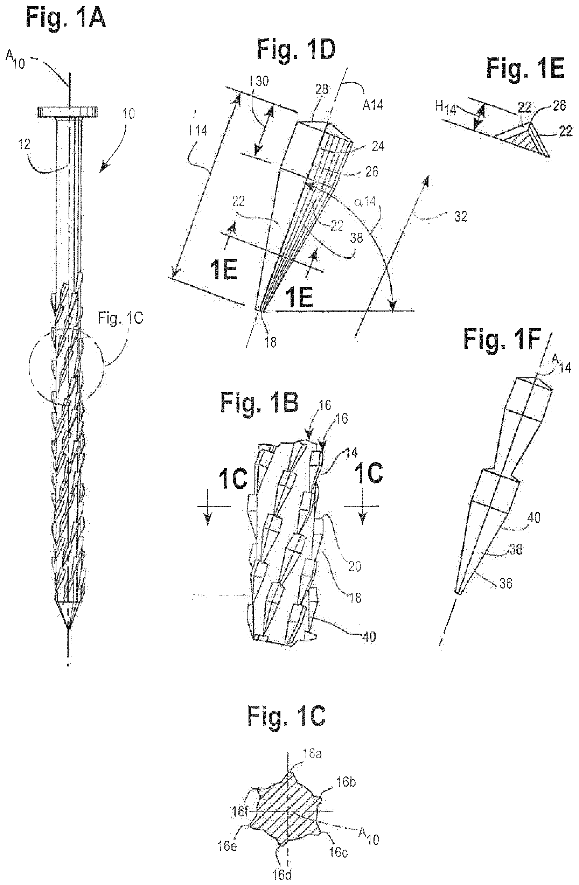

FIGS. 1A-F, 2A-F, 3A-F, 5A-F and 6A-F illustrate various embodiment of the deformed shank nail 10. In each of the illustrated embodiments, the 10 nails are formed with a plurality of longitudinal helical or spiral rows 16 of outwardly extending projections 14. The projections 14 can be formed as teeth that align, tip 18 to tail 20 in forming each of the helical rows 16a-f. The nails 10-410 in FIGS. 1A-F though 5A-F have teeth 14-514 formed on an otherwise smooth shank 12 (e.g., common drawn nail).

Referring to FIGS. 1A-1F the deformations 14 (referred to as teeth) are formed at a helix angle α₁₄ of about 80 degrees as measured through the longitudinal center axis A₁₄ of the teeth 14. The teeth 14 are symmetrical about the center axis A₁₄ and have a generally triangular cross-section (see FIG. 1E). The teeth 14 incline away from the tip 18 to form ramped 22 sides that converge at a ridge 24 that defines the peak 26 of the tooth 14. The tip 18 is slightly truncated (where it abuts a prior or forward tooth) and the rear 20 of the tooth 14 has a steep sloping surface 28 to meet the front or tip of the next tooth. A medial portion 30 of the tooth 14 is flat or non-inclined (relative to the tip to tail direction, as indicated at 32).

The nail 10 has six helical rows 16 of teeth 14 spaced 60 degrees from one another (see FIG. 1C, which shows the rows 16a-f symmetrically disposed about the shank 12). Three of the rows 16a,c,e (alternating from one another) are about equally spaced, longitudinally, such that a cross-section of a tooth 14 in one row, say 16a at a given longitudinal location on the shank 12 is the same as the tooth 14 in an alternate row, say 16c. In a current 0.120 inch (nominal) diameter nail 10, each tooth 14 has a length l₁₄ of about 0.09 inches and a medial portion length l₃₀ of about 0.05 inches. The peak height h₁₄ of the tooth 14 is about 0.04 inches.

The angle α₁₄ of the rows 16 (the helix angle) is relatively steep to promote rotation of the nail 10 as it penetrates the substrate. In this manner, rather than tearing the fibers of the substrate (wood), as the nail 10 penetrates straight into the wood, the nail 10 will rotate and the teeth 14 will follow a path created by the first teeth in each row 16. As such, the pull-out strength of the nail 10 is higher in that the teeth 14 will meet resistance from whole (as opposed to torn) fibers in the wood, in that the nail 10 will tend to pull out straight, rather than backing out through the spiral path. The ramped or inclined leading surface (creating a wedge shape) permits smooth (less resistance to) penetration of the nail 10 into the wood.

The relatively steep angle of the rear side 28 of the teeth 14 further serves to create a resistance to pull-out of the nail 10. Again, the steep rearside 20 angle encountering resistance from the non-torn fibers provides a nail 10 that while readily driven into a substrate, has high resistance to pull-out.

As can be seen from FIG. 1C, the cross-section normal to the axis A₁₀ of the nail 12, the rows 16 are aligned so as to form identical or near identical tooth cross-sections in alternating rows, e.g., 16a,c,e at any point along the nail shank 12. The line 36 formed by the juncture of the pressure flank 38 and the shank 12 (at the root 40 of the tooth 14) is an undulating spiral line.

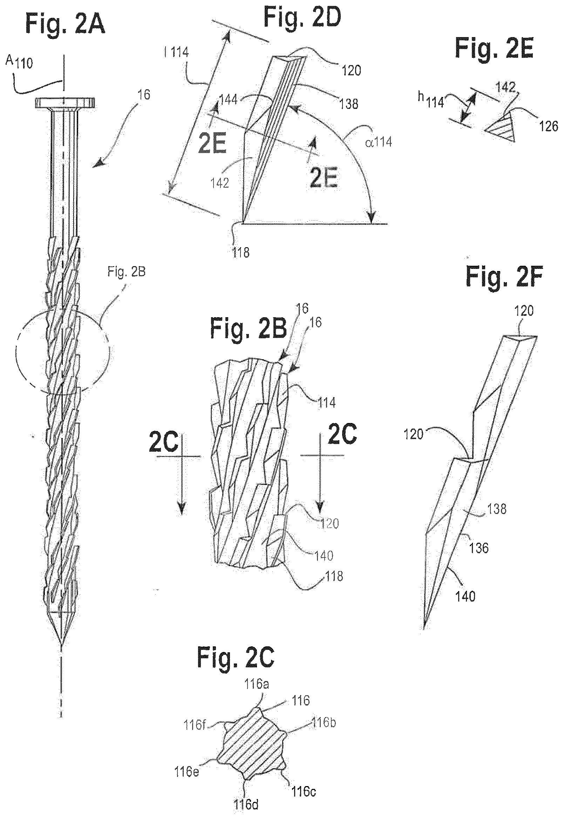

FIGS. 2A-F illustrate a nail 110 having an asymmetrical compound cut tooth 114. The tooth 114 has a downward or pressure flank 138. A lead angle α₁₁₄ defined by the line 136 at the juncture of the pressure flank 138 and the shank 112 (at the root 140 of the tooth 114) is about 70 degrees. The lead angle α₁₁₄ is not measured along the peak 126 of the tooth 114 in that the peak 126 (line) has a slight turn at the end of the compound cut face 142 (as indicated at 144).

In the current 0.120 inch (nominal) diameter nail 110, each tooth 114 has length l₁₁₄ of about 0.12 inches and a tooth height h₁₁₄ at its peak 126 of about 0.02 inches. As can be seen from the cross-section normal to the axis A₁₁₂ of the shank 112 (see FIG. 2C), the rows 116 are aligned so as to form identical or near identical tooth cross-sections in alternating rows, e.g., 116a,c,e at any point along the nail shank 112. Unlike the nail 10 of FIGS. 1A-F, in this embodiment 210, the line 136 formed by the juncture of the pressure flank 138 and the shank 112 (at the root 140 of the tooth 114) is a straight spiral line, and does not undulate. The teeth 114 overlap somewhat such that the leading end or tip 118 of each tooth 114 is subsumed within the trailing end or tail 120 of a prior tooth.

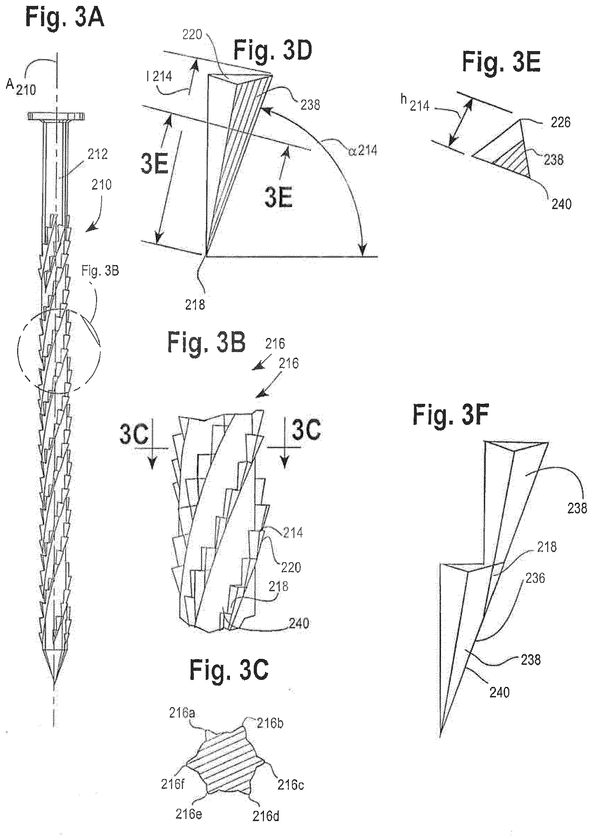

FIGS. 3A-F illustrate a nail 210 having a symmetrical tooth 214 when viewed in cross-section normal to the peak 226 line of the tooth 214. The downward edge 246 (the edge of the pressure flank 238 and the root 240) is longer than the upward edge 248, and the rear side 220 of the tooth 214 is formed with a surface normal to the longitudinal axis A₂₁₀ of the nail 210. This results in a increased resistance to pull-out of the nail 210. As can be seen from the cross-section normal to the axis A₂₁₀ of the nail (FIG. 3B), the rows 216a-f are aligned so as to form identical or near identical tooth 214 cross-sections in each of the rows 216a-f at any longitudinal point along the nail shank 212. The teeth 214 each have a length l₂₁₄ of about 0,08 inches and a tooth height h₂₁₄ at its peak 226 of about 0.03 inches

The teeth 214 overlap somewhat such that the leading end 218 of each tooth 214 is subsumed within the trailing end 220 of each prior tooth. Again, the line 236 formed by the juncture of the pressure flank 238 and the shank 212 (at the root 240 of the tooth 214) is a straight spiral line.

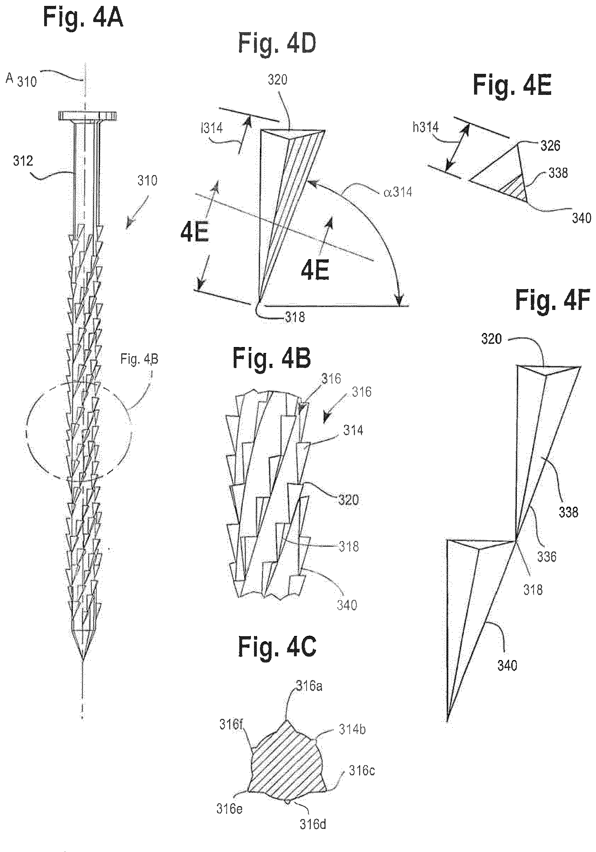

FIGS. 4A-F illustrate a nail 310 having a tooth 314 similar to the embodiment 210 of FIGS. 3A-F, but with the teeth 314 staggered so that alternating rows e.g., rows 316a,c,e, (again, rather than all of the rows 316a-f) are similarly positioned longitudinally. Accordingly, the rows 316a,c,e and 316b,d,f are aligned so as to form identical or near identical tooth 314 cross-sections in the alternating rows at any point along the nail shank 312.

The teeth 314 are tip 318 to tail 320 with no overlap of teeth 314 with one another. That is, the leading end 318 of each tooth 314 tapers substantially smoothly down to the shank 312. Again, the line 336 formed by the juncture of the pressure flank 338 and the shank 312 (at the root 340 of the tooth 314) is a straight spiral line. The teeth 314 each have a length l₃₁₄ of about 0.11 inches (there is no overlap) and a tooth height h₃₁₄ at its peak 326 of about 0.03 inches.

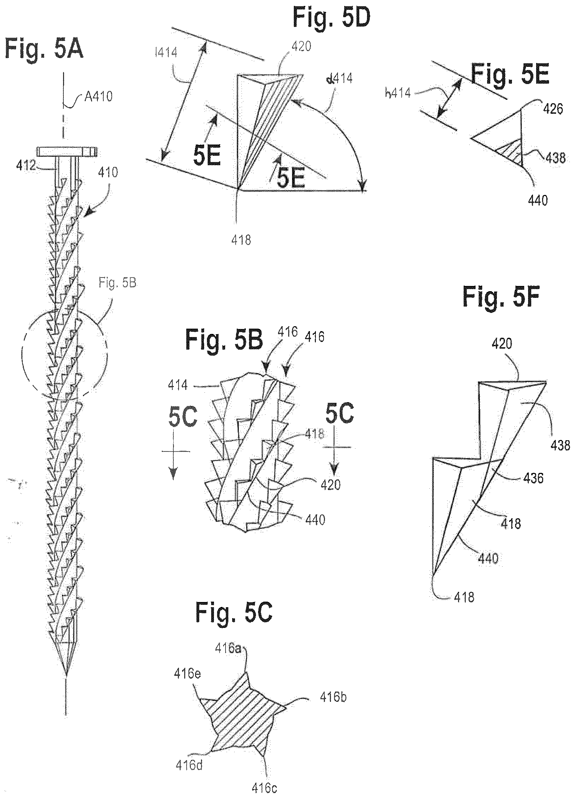

FIGS. 5A-F illustrate another embodiment of the nail 410 with the teeth 414 formed at a shallower angle α₄₁₄ than the teeth of the previous nails. In this embodiment 410 the five rows 416a-e can be aligned so as to form identical or near identical tooth 414 cross-sections in each row 416a-e at any point along the nail shank 412. Alternately, the teeth can be staggered so that the "height" repeats every fifth tooth (that is, each tooth is offset from each other by about 20 percent of the tooth's height - longitudinally along the shank).

Lengthwise or longitudinally, The teeth 414 overlap with the prior and subsequent teeth and as such, the leading end 418 of each tooth 414 is subsumed within the trailing end 420 of each prior tooth. The teeth 414 each have a length l₄₁₄ of about 0.05 inches (due to the overlap and the shallower angle α₄₁₄) and a tooth height h₄₁₄ at its peak 426 of about 0.03 inches. As seen in FIG. 5B, the pressure flank 438 rise is steep as it rises from the shank 412. Once again, the line 436 formed by the juncture of the pressure flank 438 and the shank 412 (at the root 440 of the tooth 414) is a straight spiral line.

This shape of tooth 414 can also be configured in a six row arrangement (not shown) in which the teeth are all at the same height as in the cross-section illustrated in FIG. 5C, or are formed at two heights offset from one another by about ½ of the tooth height.

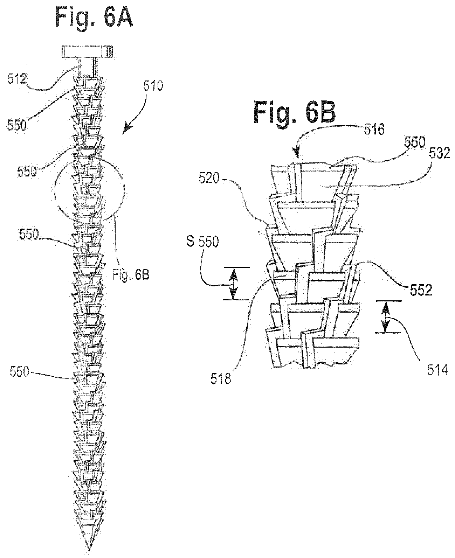

Another embodiment 510 is illustrated in FIGS. 6A-B. In this embodiment, the teeth 514 are formed in the same manner as in the embodiment 410 of FIGS. 5A-F. The nail 510 has an additional feature in that the shank 512 is formed as a ring shank nail.

As seen in FIG. 6B, rings 550 are formed as sloped or inclined surfaces 552 on which the teeth 514 are formed. The teeth 514 have the same profile as those of the embodiment 410 in FIGS. 5A-F, but the rings 550 are interspersed along the shank 512 length. Because the rings 550 have a spacing S₅₅₀ that is different from the length l₅₁₄ of the teeth 514, the teeth 514 reside at different locations along the length of the shank 512 than the rings 550. The ring spacing S₅₅₀ can be such that it is different from the tooth length l₅₁₄ and is different from a multiple of the teeth length l₅₁₄.

In each of the embodiments 10-510, it has been found that the helical or spiral nature of the rows 16-516 of teeth 14-514 promote rotation of the nail 10-510 as it penetrates the substrate (wood). At the same time, the back (interference) surface 20-520 of the teeth 14-514 tend to create substantial resistance to pullout of the nail 10-510 by interference between the tooth back surface 20-520 and the fibers of the wood or substrate. And, in the combination ring-shank, toothed deformed shank nail 510, the rings 550 create even greater resistance to pull-out by making use of the spaces between the teeth 514 (that are otherwise flat - forming the shank surface - and parallel to the direction of withdrawal) to provide features (ridges) that interfere with withdrawal.

The tendency of the spiral rows 16-516 to effect rotation of the nail 10-510 is intended to reduce the amount of wood fibers that are torn or sheared by the penetrating nail 10-510. Nevertheless, there is still some level of fiber tearing or shearing that occurs. The inclined surfaces 552 of the rings 550 facilitate penetration of the nail 510 and reduce the tearing or shearing of the wood fibers.

In the present disclosure, the words "a" or "an" are to be taken to include both the singular and the plural. Conversely, any reference to plural items shall, where appropriate, include the singular.

## Claims

1. A nail comprising:
a head;
a penetrating tip (18) ;
a shank (12) extending from the head to the penetrating tip and having a circumference and a longitudinal axis; and
a plurality of rows of deformations (14) in the shank (12) extending outwardly of the shank, the rows formed in a spiral pattern along the length of the shank (12) from about the head to about the penetrating tip, the rows of deformations (14) being formed parallel to one another and formed at an angle of at least 50 degrees relative to a perpendicular to a longitudinal axis of the nail whereby the deformations (14 ; 414 ; 514) are formed as teeth extending outwardly from the shank (12 ; 412 ; 14 ; 414 ; 514) and are formed with a leading portion (22) tapering toward the penetrating tip (18) and a trailing portion (20) having an interference surface (28) oriented toward the head, opposite the leading portion (22), and
**characterized in that** the teeth (114 ; 414 ; 514) overlap one another at adjacent leading ends (118 ; 418 ; 518) and trailing ends (120 ; 420 ; 520).

2. The nail in accordance with claim 1, wherein the teeth (14 ; 414 ; 514) have a generally triangular cross-sectional shape.

3. The nail in accordance with claim 2, wherein the shape is a symmetrical cross-sectional shape.

4. The nail in accordance with claim 1, wherein the rows (16 ; 416 ; 516) are equally circumferentially spaced from one another.

5. The nail in accordance with claim 1, including six rows (16 ; 416) of deformations.

6. The nail in accordance with claim 1, wherein the nail (510) is a ring shank nail having circumferential rings (550) formed in the shank (512), the deformations (514) being formed as teeth formed integral with the rings.

7. The nail in accordance with claim 8, wherein the rings (550) are formed spaced from one another a distance that is different from a length of the teeth (514) and a multiple of a length of the teeth.

8. The nail in accordance with claim 8, wherein a height of the rings (550) is less than a height of the teeth (514) at a maximum height.

## Patentansprüche

1. Nagel, aufweisend:
einen Kopf;
eine eindringende Spitze (18);
einen Schaft (12), welcher sich von dem Kopf zu der eindringenden Spitze erstreckt und einen Umfang und eine longitudinale Achse aufweist; und
eine Vielzahl von Reihen von Verformungen (14) in dem Schaft (12), welche sich von dem Schaft nach außen erstrecken, wobei die Reihen in einem spiralförmigen Muster entlang der Länge des Schafts (12) von etwa dem Kopf bis etwa der eindringenden Spitze ausgebildet sind, wobei die Reihen von Verformungen (14) parallel zueinander ausgebildet und unter einem Winkel von mindestens 50 Grad in Bezug auf eine Senkrechte zu einer longitudinalen Achse des Nagels ausgebildet sind,
wobei die Verformungen (14; 414; 514) als Zähne ausgebildet sind, welche sich von dem Schaft (12; 412; 14; 414; 514) nach außen erstrecken und mit einem vorderen Abschnitt (22), welcher in Richtung auf die eindringende Spitze (18) spitz zuläuft, und einem hinteren Abschnitt (20) ausgebildet sind, welcher eine Eingriffsfläche (28) aufweist, welche in Richtung auf den Kopf, entgegengesetzt zu dem vorderen Abschnitt (22), ausgerichtet ist, und
**dadurch gekennzeichnet, dass** die Zähne (114; 414; 514) an benachbarten vorderen Enden (118; 418; 518) und hinteren Enden (120; 420; 520) sich einander überlappen.

2. Nagel nach Anspruch 1, wobei die Zähne (14; 414; 514) eine im Allgemeinen dreieckige Querschnittsform aufweisen.

3. Nagel nach Anspruch 2, wobei die Form eine symmetrische Querschnittsform ist.

4. Nagel nach Anspruch 1, wobei die Reihen (16; 416; 516) gleichmäßig über den Umfang voneinander beabstandet sind.

5. Nagel nach Anspruch 1, aufweisend sechs Reihen (16; 416) an Verformungen.

6. Nagel nach Anspruch 1, wobei der Nagel (510) ein Ringnut-Nagel ist, welcher in dem Schaft (512) ausgebildete Umfangsringe (550) aufweist, wobei die Verformungen (514) als Zähne gebildet sind, welche integral mit den Ringen ausgebildet sind.

7. Nagel nach Anspruch 8, wobei die Ringe (550) in einem Abstand voneinander beabstandet ausgebildet sind, welcher von einer Länge der Zähne (514) und einem Vielfachen einer Länge der Zähne verschieden ist.

8. Nagel nach Anspruch 8, wobei eine Höhe der Ringe (550) bei einer maximalen Höhe kleiner als eine Höhe der Zähne (514) ist.

## Revendications

1. Clou, comprenant:
une tête;
une pointe pénétrante (18);
une tige (12) qui s'étend à partir de la tête jusqu'à la pointe pénétrante et présentant une circonférence et un axe longitudinal; et
une pluralité de rangées de déformations (14) dans la tige (12) qui s'étendent vers l'extérieur de la tige, les rangées étant formées en un motif hélicoïdal le long de la longueur de la tige (12) à partir d'environ la tête jusqu'à environ la pointe pénétrante, les rangées de déformations (14) étant formées parallèlement les unes aux autres et formées selon un angle d'au moins 50 degrés par rapport à une perpendiculaire à un axe longitudinal du clou,
dans lequel les déformations (14; 414; 514) sont formées comme des dents qui s'étendent vers l'extérieur à partir de la tige (12; 412; 14; 414; 514) et sont formées avec une partie avant (22) qui s'amincit en direction de la pointe pénétrante (18) et une partie arrière (20) qui présente une surface d'interférence (28) orientée en direction de la tête, à l'opposé de la partie avant (22), et
**caractérisé en ce que** les dents (114; 414; 514) se chevauchent mutuellement à des extrémités avant adjacentes (118; 418; 518) et à des extrémités arrière (120; 420; 520).

2. Clou selon la revendication 1, dans lequel les dents (14; 414; 514) présentent une forme de section transversale essentiellement triangulaire.

3. Clou selon la revendication 2, dans lequel la forme est une forme de section transversale symétrique.

4. Clou selon la revendication 1, dans lequel les rangées (16; 416; 516) sont espacées les unes des autres d'une façon uniformément circonférentielle.

5. Clou selon la revendication 1, comprenant six rangées (16; 416) de déformations.

6. Clou selon la revendication 1, dans lequel le clou (510) est un clou à tige segmentée présentant des segments circonférentiels (550) formés dans la tige (512), les déformations (514) étant formées comme des dents formées intégralement avec les segments.

7. Clou selon la revendication 8, dans lequel les segments (550) sont formés espacés les uns des autres d'une distance qui est différente d'une longueur des dents (514) et d'un multiple d'une longueur des dents.

8. Clou selon la revendication 8, dans lequel une hauteur des segments (550) est inférieure à une hauteur des dents (514) à une hauteur maximum.
